# EUROPEAN PATENT APPLICATION

(11) **EP 4 841 489 A1**
(43) Date of publication of application: **18.11.2026**
(21) Application number: 25382495.7
(22) Date of filing: 16.05.2025
(51) Int. Cl.: G06F 21/55, H04L 9/40

(54) **A METHOD FOR CALCULATING WHETHER DATA IS INDICATIVE OF AN INTRUSION INTO A COMPUTING NETWORK**

(71) Applicant: Fundacion Centro de Tecnologias de Interaccion Visual y comunicaciones Vicomtech, 20009 San Sebastian (ES); BCAM Basque Center for Applied Mathematics, 48009 Bilbao (ES)
(72) Inventor: CONTRERAS TORRES, Ernesto, 48009 Alameda de Mazarredo 14, Bilbao, Bizkaia (ES); ROJAS DELGADO, Jairo, 48009 Alameda de Mazarredo 14, Bilbao, Bizkaia (ES); ZOLA, Francesco, 20009 San Sebastian (GIPUZKOA) (ES); ORDUNA URRUTIA, Raúl, 20009 San Sebastian (GIPUZKOA) (ES); ETXEBERRIA BARRIO, Xabier, 20009 San Sebastian (GIPUZKOA) (ES); PALLIN TOQUERO, Igor, 20009 San Sebastian (GIPUZKOA) (ES)
(74) Representative: Balder IP Law, S.L.

(57) **Abstract**

The invention relates to a method for calculating whether data is indicative of an intrusion into a computing network, the method comprising:
obtaining an array (20) based on the data, each element of the array being indicative of at least one parameter of communication; and
processing the array with a neural network configured to perform convolution by applying a kernel to each subset of elements of the array, wherein each subset of elements is associated with communication from one device A of the computing network and with communication to one device B of the computing network so that each element of the same subset fulfills that the element is indicative of at least one parameter of communication from device A to a device of the computing network and/or the element is indicative of at least one parameter of communication to device B from a device of the computing network.

## Description

### TECHNICAL FIELD

The present invention is encompassed within the field of methods and systems for calculating whether data is indicative of an intrusion into a computing network.

### BACKGROUND

Detecting cyber-attacks on a network of electronic devices is a complex, multivariate problem involving a large amount of data, impossible to analyze manually by cybersecurity experts. Known methods for detection of cyber-attacks are based on the specific identification of unique content inclusion (called signatures, because they identify each type of attack), or the study of general factors, such as the frequency of packets or the type of command sent.

Some attacks which cause noticeable changes within the network, such as Distributed Denial of Service Attacks (i.e., DDoS attacks), can be easily detected. However, other more sophisticated attacks are not so easily detected because they cause smaller changes within the network.

It is desirable to find methods for detecting cyber-attacks in a reliable manner and which use large amounts of data involved related to the network.

### SUMMARY

A first aspect of the disclosure relates to a computer-implemented method for calculating whether data is indicative of an intrusion into a computing network, the computing network comprising at least two devices, the data being indicative of parameters of communication of the at least two devices, the method comprising:
obtaining an array based on the data, the array comprising at least three dimensions, wherein each element of the array is indicative of at least one parameter of communication from one device of the computing network (i.e., one device acting as source in said communication) to one device of the computing network (i.e., one device acting as destination in said communication); and
processing the array with a neural network, the neural network being configured to perform convolution by applying a kernel to each subset of elements of the array, wherein each subset of elements is associated with communication of device A of the computing network and with communication of device B of the computing network so that each element of the same subset fulfills at least one of the following conditions: the element is indicative of at least one parameter of communication from device A to a device of the computing network, the element is indicative of at least one parameter of communication to device B from a device of the computing network, the element is indicative of at least one parameter of communication from device B to a device of the computing network and the element is indicative of at least one parameter of communication to device A from a device of the computing network; wherein every pair of devices A and B of the network is associated with a subset of elements of the array.

A computing network comprises devices, e.g., more than two, ten, one hundred or one thousand devices. Each device of the computing network is in communication with at least one device of the computing network. For example, the at least two devices are in communication with each other in the computing network.

In some embodiments, each of the at least two devices is at least one of the following: a computer (e.g., each computer comprising a network-interface card), a smartphone (e.g., each smartphone comprising a network-interface card), a router (e.g., each smartphone comprising a network-interface card), a switch, a bridge, a modem, a hub and a repeater.

In some embodiments, the intrusion into the computing network is at least one of: exploration of exploitation surface of the computing network, exploration of attack surface of the computing network, leak of information from the computing network and remote control of the computing network.

The computing network is representable with a graph comprising nodes joined by edges. Each node represents each device of the computing network. Each edge joins two nodes and represents parameters of communication between the devices represented by the nodes joined by the edge. When bidirectional communication is enabled between two devices of the network, parameters of the communication in one direction may be different from parameters of communication in the opposite direction. Said bidirectional communication may be represented in the graph with one edge for each direction. When a device acts as source and destination of a communication, parameters of said communication may be represented in the graph with an edge starting and ending in the same node.

Each element of the array is a number indicative of the at least one parameter of communication between a source and a destination. The same number may be indicative of several parameters of the communication. In other words, data of several parameters of the communication may be processed to generate just one value indicative of said parameters, thus allowing to reduce dimensionality/size of the array.

The array is obtained based on the data indicative of parameters of communication. The array may comprise three dimensions. For example, the array may comprise a first dimension referring to devices acting as communication source (i.e., a first dimension indicative of source device, which is a device acting as source in the respective communication), a second dimension referring to devices acting as communication destination (i.e., a second dimension indicative of destination device, which is a device acting as destination in the respective communication), and a third dimension referring to parameters of communication (e.g., indicative of the type of parameter of communication). Thereby, each element of the array refers to a particular communication source (first dimension), a particular communication destination (second dimension) and to at least one parameter of communication (third dimension) between the communication source and the communication destination to which the element refers according to the first and second dimensions of the respective element.

In unicast and multicast communications the communication source and the communication destination are clear since they are determined prior to performing the communication. In broadcast communications, the communication destination is not specified, but it can be determined or estimated based on the features of the network, of the devices of the network and of the parameters of the broadcast communication. Therefore, the array can include parameters of broadcast communication.

In some embodiments, the parameters of communication are indicative of metadata of the respective communication and/or of data transferred in the respective communication.

For those cases in which there is no communication, the value of the element is indicative of said lack of communication (e.g., the value of said element may be zero).

The device A can be the same as the device B. For example, the communication may be a loopback communication.

The convolution is performed by successively applying the kernel to the elements of each one of the subsets of elements. The application of the kernel involves performing mathematical operations among the elements of the respective subset and the elements (i.e., numbers) of the kernel. A resulting array is obtained as a result of the convolution.

In other words, unlike in typical convolutional neural networks wherein the kernel is applied to arrays (e.g., cube arrays, which are square matrices if the array is two-dimensional) which are portions of a bigger array, according to the first aspect of the disclosure the kernel is applied to different vectors within the array which may define a substantial cross-shape (e.g., including T-shape and L-shape). Therefore, it can be understood that the first aspect of the disclosure involves a step of processing the topology of the computing network to obtain a structure (e.g., a fixed structure) within the array (e.g., two vectors of determined dimensions) to which the kernel is applied and which usually is different from the cubic array, and hence is different from square matrix.

By applying the kernel to the subsets associated with source device A and destination device B, the method allows applying the kernel to all combinations of source and/or destination devices. This allows taking into consideration, in each application of the kernel, parameters of the respective communication having as source the respective device A/B and/or as destination the respective device B/A even if the elements are not contiguous (e.g., are far from each other) in the array. It has been observed that this way of applying the kernel performs particularly well for determining whether data is indicative of an intrusion into the computing network. More specifically, it performs particularly well for detecting intrusions which cause combinations of relatively small changes of the communication parameters in several devices (e.g., in three or more devices) of the computing network.At least some of the communication parameters included in the array or aggregations of values of the communication parameters are processed by a layer of the neural network. Each subsequent layer of the neural network processes the results obtained by the previous layer of the neural network. Thereby, each layer of the neural network allows obtaining information of different degrees of abstraction of the communication, e.g., from information directly obtained from the particular communication parameters to information about particular protocols and then to information about a potential intrusion.

In some embodiments, each one of the subsets to which the kernel is applied is associated with a different combination of source device and destination device. In this way, the kernel is not applied to several subsets which are associated with a same combination of source device A and destination device B. This allows minimizing a number of applications of the kernel in the convolution while applying the kernel to subsets for all possible combinations of source device A and destination device B.

In some embodiments, each one of the subsets to which the kernel is applied comprises at least three elements, e.g., at least four elements, e.g., at least five elements of each pair of source device and destination device in the subset; each element of the at least three elements being indicative of a different parameter of communication. Applying the kernel to more elements which are indicative of different parameters of communication allows using more information of the communication in the method, so that more information is used to determine if there is intrusion.

In some embodiments, each subset of elements is associated with communication from one device A of the computing network and with communication to one device B of the computing network so that each element of the same subset fulfills at least one of the following conditions: the element is indicative of at least one parameter of communication from device A to a device of the computing network and the element is indicative of at least one parameter of communication to device B from a device of the computing network. This allows minimizing a quantity of array elements involved in each application of the kernel.

In some embodiments, at least some of the subsets of elements are associated with communication of device A of the computing network and with communication of device B of the computing network so that each subset of the at least some subsets fulfills condition i), condition ii) and fulfill that device A is other than device B:
- condition i):
   ∘ at least one element of the subset is indicative of at least one parameter of communication to device A from a device of the computing network different than device A, and/or
   ∘ at least one element of the subset is indicative of at least one parameter of communication from device B to a device of the computing network different than device B; and
- condition ii):
   ∘ at least one element of the subset is indicative of at least one parameter of communication to device B from a device of the computing network different than device B, and
   ∘ at least one element of the subset is indicative of at least one parameter of communication from device A to a device of the computing network different than device A.

Thereby, a same subset not only takes into account one or more elements related to the communication having A as source and/or B as destination, but also takes into account one or more elements related to communication having B as source and/or A as destination. It has been observed that this combination of elements in a same subset to which the kernel is applied may allow enhancing the determination of intrusion in more complex communication patterns at the cost of requiring more computing resources because more data need to be processed.

In some embodiments, each subset of elements to which the kernel is applied is a selection from elements of the array associated with communication of device A and elements of the array associated with communication of device B.

Thereby, the array comprises elements which, in spite of being associated with at least one parameter of communication of device A (e.g., from device A) and/or of device B (e.g., to device B), do not form part of the respective subset to which the kernel is applied. This allows selecting the communication parameters which are considered for determining intrusion and disregarding other parameters. The selection of elements may be based on the values of the elements associated with communication of device A and of device B. Thereby this type of selection allows enhancing performance of detection of intrusions into a computing network in those cases in which intrusion is particularly dependent on certain parameters which are selected and allows minimizing operations required since some of the elements are disregarded in the convolution.

In some embodiments, the selection from the elements of the array associated with communication of device A and from the elements of the array associated with communication of device B are based on aggregated values of the elements of the array associated with communication of device A and of the elements of the array associated with communication of device B. The aggregation of values allows decreasing the number of values to be considered in a selection of appropriate values for intrusion detection. Thereby, the number of values to which the kernel is applied is reduced before applying the kernel.

In some embodiments, each aggregated value results from aggregating the values of the elements of the array for a same pair of device of communication source and device of communication destination of the computing network, thus obtaining an aggregated value for each combination of source and destination device of the computing network. Said aggregation of values results in an array having a lower dimensionality than the original array, in particular results in an adjacency matrix.

In some embodiments, the aggregation is performed by applying an ordered weighted averaging (OWA) operator.

In some embodiments, the selected elements may be those associated with the same pairs of source and destination devices as the aggregated values which meet one of the following conditions:
- a determined number of highest aggregated values,
- a determined number of lowest aggregated values, and
- a determined number of aggregated values selected by applying a probability to each aggregated value, the probability of each aggregated value being based on the aggregated value.

The adjacency matrix comprises one row for each device of the computing network and one column for each device of the computing network, wherein each row refers to one device acting as source in a communication, and each column refers to one device acting as destination in a communication, and wherein each element of the adjacency matrix is an aggregated value of the elements of the array indicative of at least one parameter of communication from the device acting as source according to the row of the element and to the device acting as destination according to the column of the element.

In some embodiments, the selection of the elements is not based on the value of the elements (e.g., the elements are randomly selected). For example, the selected elements may be associated with the same pairs of source and destination devices as randomly-selected aggregated values (e.g., each aggregated value having the same probability of being selected). The aggregation of values resulting in values of elements of the adjacency matrix allows decreasing even further the number of values to be considered in a selection of appropriate values for intrusion detection.

The terms "rows" and "columns" are interchangeable. In other words, each column could refer to a same device acting as communication source and each row could refer to a same device acting as communication destination.

In some embodiments, the aggregation is computed by applying an ordered weighted averaging operator. For example, the aggregation is computed by at least one of:
- selecting a value of a determined element of the array associated with the respective pair of device of communication source and device of communication destination of the computing network,
- calculating a mean of the values of all the elements of the array associated with the respective pair of device of communication source and device of communication destination of the computing network,
- selecting the maximum value of the elements of the array associated with the respective pair of device of communication source and device of communication destination of the computing network, and
- selecting the minimum value of the elements of the array associated with the respective pair of device of communication source and device of communication destination of the computing network.

In some embodiments, the at least one parameter of communication is at least one of: a rate of communication between the respective devices (e.g., data size per unit of time or number of packets per unit of time), and data size sent and/or received in the communication by at least one of the respective devices.

In some embodiments, the at least one parameter of communication is at least one of: a communication address in the communication between the respective devices, a rate of packets per unit of time in the communication between the respective devices and sizes of packets in the communication between the respective devices. Said particular information of the communication has been found advantageous, in general, for detecting intrusions compared to other types of information of the communication, and more particularly in industrial networks (i.e., networks comprising sensors, controllers and actuators).

In some embodiments, the communication address is at least one of: a MAC address of a communication source, a MAC address of a communication destination, an IP address of a communication source, an IP address of a communication destination, a port of a communication source, a port of a communication destination, a user of communication source, a user of communication destination, a session of communication source and a session of communication destination.

In some embodiments, the rate of packets per unit of time is at least one of: a rate, per unit of time, of packets sent in the data link layer, a rate, per unit of time, of packets sent in the network layer, and a rate, per unit of time, of packets sent in the transport layer or in the application layer.

In some embodiments, the sizes of packets comprise at least one of: aggregations of sizes of packets of the data link layer, aggregations of sizes of packets of the network layer and aggregation of sizes of packets of the transport layer.

The aggregation of sizes of packets is calculated based on the packets sent in the communication between respective devices in a determined time interval or session. In the time interval several connections may be produced, sending different sizes of packets in each connection. The aggregation of values allows combining the sizes of packets of all the connections of the interval. For example, the aggregation may be performed by calculating a mean of sizes of packets per connection (i.e., summing the sizes of packets of all the connections and dividing the result by the number of connections) or selecting the highest/lowest size of packets of all the connections.

In some embodiments, the at least one parameter of communication is at least one of: a MAC address of a communication source, a MAC address of a communication destination, a rate, per unit of time, of packets sent in the data link layer, a rate, per unit of time, of packets received in the data link layer and aggregations of sizes of packets of the data link layer. Thereby, the at least one parameter of communication is related to the data link layer.

For example, the at leas one parameter of communication comprises an International Mobile Subscriber Identity (IMSI).

In some embodiments, the at least one parameter of communication is at least one of: an IP address of a communication source, an IP address of a communication destination, a rate, per unit of time, of packets sent in the network layer, a rate, per unit of time, of packets received in the network layer, aggregations of sizes of packets of the network layer, time to live (TTL) of data, internet header length and flags of the network layer (e.g., Don't Fragment flag and More Fragments flag). Thereby, the at least one parameter of communication is related to the network layer.

In some embodiments, the at least one parameter of communication is at least one of: an IP address and a port of a communication source, an IP address and a port of a communication destination, a rate, per unit of time, of packets sent in the transport layer, a rate, per unit of time, of packets received in the transport layer, aggregations of sizes of packets of the transport layer, time to live (TTL) of data, internet header length and flags of the network layer (e.g., Don't Fragment flag and More Fragments flag) and object identifiers (OID). Thereby, the at least one parameter of communication is related to the transport layer.

Restricting the parameters of communication to a same layer (e.g., transport layer or network layer) allows enhancing detection of intrusions affecting only respective layer compared to other cases in which parameters of communication of different layers are mixed in the same original array.

In some embodiments, the at least one parameter of communication comprises a total number (also known as a count) of unique identifiers that happen in a session or determined time interval in a protocol of the application layer and/or in a protocol of the transport layer (e.g., session data at the level of the application layer, registers, data spaces and/or identifiers).

In some embodiments, the method comprises obtaining, for each interval of time of several intervals of time or for each session of several sessions or for each packet set of several packet sets, an array comprising at least three dimensions, the array being based on data indicative of parameters of communication of the devices of the computing network in the respective interval of time or session or packet set, so that an array is obtained for each interval of time or session or packet set; wherein each element of the arrays is indicative of at least one parameter of communication from one device of the computing network to one device of the computing network; the method comprising processing each array of the arrays with the neural network.

Thereby, the method allows processing data from different time intervals/sessions/packet sets with the same neural network to detect intrusions. These allows considering the evolution in time of the data of the computing network, so that there is more information for basing the detection of intrusion.

In some embodiments, the results of processing the array with the neural network are result values, and the method further comprises processing the result values to calculate whether the data is indicative of an intrusion into a computing network.

The result values can be considered features of the input graph(s). By processing said features (e.g., classifying said features) it can be determined whether the data is indicative of an intrusion into the computing network.

In some embodiments, a total number of layers of the neural network is computed based on a clustering coefficient and an average path length of a graph (also referred to as "original graph" in the present disclosure) representing the computing network; wherein the graph comprises nodes and edges joining the nodes, wherein each node represents a device of the computing network, and wherein each edge represents one of:
- at least one parameter of a unidirectional communication between the two devices represented by the two nodes joined by the respective edge, and
- at least one parameter of communication having as source and destination the same device represented by a node from which the respective edge starts and in which the respective edge ends.

In some embodiments, the total number of layers is computed based on a comparison of the clustering coefficient and the average path length of the graph with the clustering coefficient and average path length of a graph representing a lattice network and with the clustering coefficient and average path length of a graph representing a random network; wherein the graph representing the lattice network has the same number of nodes, weights and degree distribution as the graph representing the network, the weights being randomly distributed with respect to the weights of the graph representing the network; and wherein the graph representing the random network has the same degree distribution as the graph representing the network.

For example, if the original graph is a small-world graph (e.g., the clustering coefficient of the original graph is higher than the clustering coefficient of the lattice network and than the clustering coefficient of the random network, and the average path length of the original graph is lower than the average path length of the lattice network and than the average path length of the random network) then the total number of layers of the neural network is smaller than if the original graph is not small-world graph or has a relatively lower degree of small-worldness.

A second aspect of the disclosure relates to a data processing apparatus or system comprising means for carrying out the method of the first aspect of the disclosure.

A third aspect of the disclosure relates to a computer program product comprising instructions which, when the program is executed by a computer, cause the computer to carry out the method of the first aspect of the disclosure.

A fourth aspect of the disclosure relates to a computer-readable medium (e.g., a non-transitory computer-readable medium) comprising instructions which, when executed by a computer, cause the computer to carry out the method of the first aspect of the disclosure.

Similar advantages as those described with respect to the first aspect of the disclosure are also applicable to the second, third and fourth aspects of the disclosure

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a graph representing a computing network in accordance with embodiments.
Figure 2 shows an array in accordance with embodiments.
Figure 3 shows an adjacency matrix in accordance with embodiments.
Figures 4A, 4B and 4C illustrate different types of selection of elements for convolution in accordance with embodiments.
Figures 5 and 6 illustrate a selection of edges for convolution in accordance with embodiments.
Figure 7 shows a convolution in accordance with embodiments.
Figure 8 shows a method for detecting intrusions in accordance with embodiments.
Figure 9 shows a system for detecting intrusions in accordance with embodiments.
Figure 10 shows how an array is processed in accordance with embodiments.
Figure 11 shows how a small-world coefficient is calculated in accordance with embodiments.
Figure 12 shows how a lattice network is obtained in accordance with embodiments.
Figure 13 shows how a random network is obtained in accordance with embodiments.

### DETAILED DESCRIPTION

The following description is not to be taken in a limiting sense but is given solely for the purpose of describing the broad principles of the invention. Embodiments of the invention will be described by way of example, with reference to the above-mentioned drawings.

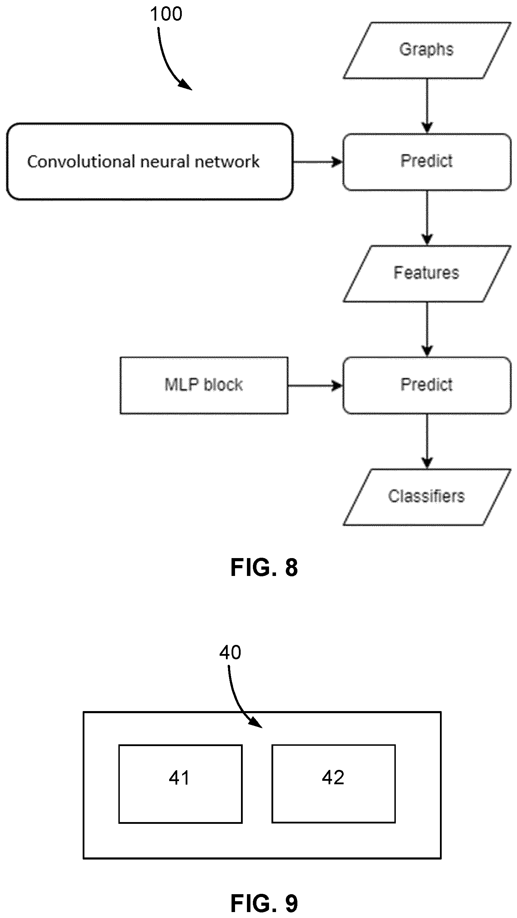

Methods according to present disclosure are carried out, for example, by the system 40 (see figure 9). The system 40 may comprise at least one computing device 41. The at least one computing device 41 may be, for example, a CPU, a GPU, an FPGA, an ASIC, a personal computer, a laptop, etc. The system 40 comprises at least one memory 42. The at least one memory 42 is communicatively connected with the at least one computing device 41 or is part of the at least one computing device 41.

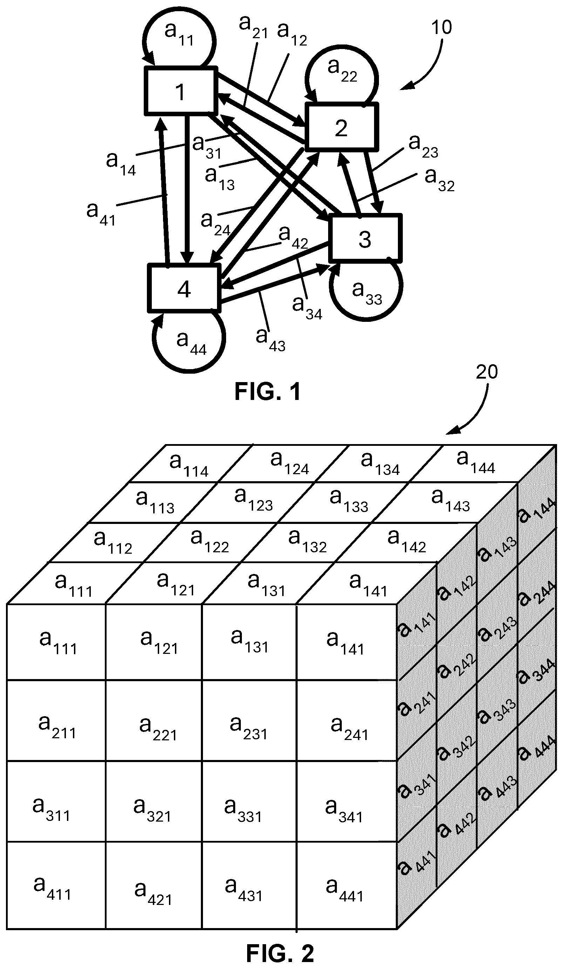

Figure 1 shows an example of a graph 10 representing a computing network. Each node 1, 2, 3, 4 of the graph represents one device of the computing network. For the sake of conciseness it is illustrated a computing network comprising four devices. Examples of devices are: one or more computers (e.g., each computer comprising a network-interface card), one or more smartphones (e.g., each smartphone comprising a network-interface card), one or more routers, one or more bridges, one or more modems, one or more hubs and one or more repeaters.

The devices of the computing network are in communication with each other. Each one of the edges a₁₁, a₁₂, ... a₄₄ joining the nodes represents at least one parameter of communication of the node(s) 1, 2, 3, 4 joined by the edges in the direction indicated by the arrow of the respective edge. To explain a few: the edge a₁₁ represents at least one parameter of communication between the device represented by the node 1 and itself (i.e., the device represented by node 1), the edge a₁₂ represents at least one parameter of communication from the device represented by the node 1 to the device represented by the node 2, the edge a₄₃ represents at least one parameter of communication from the device represented by the node 4 to the device represented by the node 3.

Figure 2 shows an array 20 representing the graph 10. Each element of the array 20 is a value of an edge of the graph 10. Each row of the array 20 represents a different device of source of communication, namely, the first row comprises the values of the edges having the device represented by node 1 as the source of communication, the second row comprises the values of the edges having the device represented by node 2 as the source of communication, and so on. Different rows are represented with different first indexes. Each column of the array 20 represents a different device of destination of communication, namely, the first column comprises the values of the edges having the device represented by node 1 as the destination of communication, the second column comprises the values of the edges having the device represented by node 2 as the destination of communication, and so on. Different columns are represented with different second indexes. The values at different depths of the array 20 and for a same row and column (e.g., a₁₂₁, a₁₂₂, a₁₂₃ and a₁₂₄) refer to values of different types of parameters of communication, the communication being from a same device and to a same device determined by the first and second indexes. Different depths are represented with different third indexes.

In particular, as shown in figure 2, each edge represents four types of parameters of communication (i.e., each edge can be considered a vector of four values), although in other embodiments each edge could represent two, three or more than four types of parameters. To explain a few: the edge a₁₁ has values a₁₁₁, a₁₁₂, a₁₁₃, a₁₁₄, and the edge a₃₂ has values a₃₂₁, a₃₂₂, a₃₂₃, a₃₂₄.

Examples of the at least one parameter of communication represented by each edge are one or more of: an address of a communication source, an address of a communication destination, a rate of packets per unit of time and aggregation of sizes of packets. For example, the elements having the number one as third index could refer to an address of communication source, the elements having the number two as third index could refer to an address of communication destination, the elements having the number three as third index could refer to a rate of packets per unit of time, and the elements having the number four as third index could refer to an aggregation of sizes of packets.

Each one of the parameters of communication represented in a same array 20 is for a same time interval of the communication. The values of the array 20 can be obtained by preprocessing data of the communication between the devices of the computing network.

Figure 8 shows an example of a method 100 of processing the array 20 to detect whether there has been an intrusion in the computing network. Firstly, arrays are determined, wherein each array is based on a graph for the determined interval of time. Then the arrays are processed with a neural network, so that features of the communication of the network are predicted. Then, the features are processed with a multilayer perceptron (MLP block) to classify the predicted features into indicative of detection of intrusion in the network or indicative of detection of non-intrusion in the network.

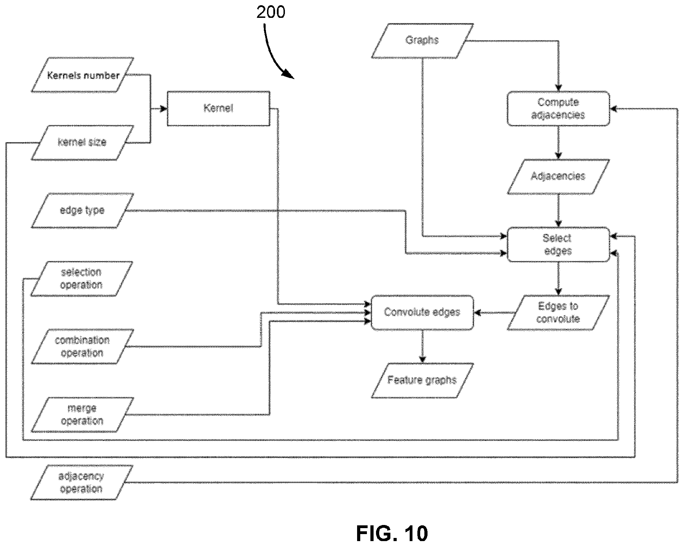

Figure 10 illustrates a method 200 for the processing of the arrays with the neural network.

The kernels number refers to a total number of kernels that the layer will contain. The kernels number is similar to the one known in classic convolutional neural networks, where the number of kernels is normally be fixed.

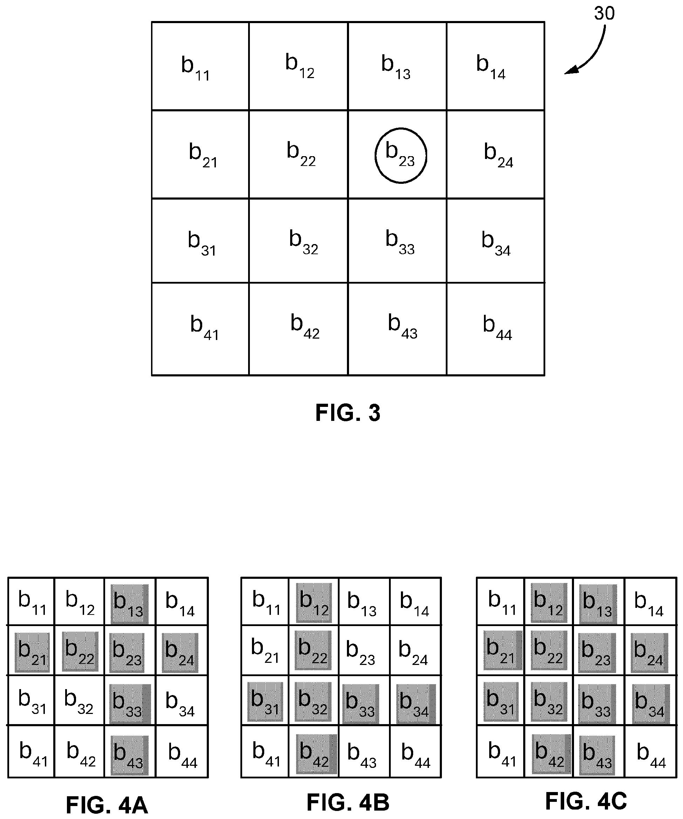

Adjacencies of the arrays are computed to determine selection of elements of the arrays. Figure 3 shows an example of an adjacency matrix 30 obtained by computing the adjacencies of the original array 10. The adjacency computation receives the graphs and generates a weighted adjacency matrix for each graph. The values of each adjacency matrix are obtained by performing calculations. Each adjacency matrix comprises one element for each edge of the respective graph. The adjacency matrix is a weight adjacency matrix in the sense that each element of the adjacency matrix has a value which is not merely indicative of whether there is communication between the respective devices of the network but is also indicative of at least one parameter of communication (e.g., rate of communication, data size and/or communication address) between the respective devices.

The calculations performed for obtaining an adjacency matrix for an array are such that just one value is obtained for each edge of the respective graph by combining the values of the respective edge. Some examples of operators which can be performed for transforming the values of each edge in just one value are ordered weighted averaging (OWA) operators. In some examples, the operations which are performed for transforming the values of each edge in just one value are:
∘ selection: this operation selects a determined value of the edge (e.g., the value of the edge having 1 as third index).
∘ mean: this operation generates the mean value of all the values of the edge.
∘ max: this operation selects the maximum of all the values of the edge.
∘ min: this operation selects the minimum of all the values of the edge.

If the mean operation is used, there is the following relation between the elements of the original array 20 and the elements of the adjacency matrix 30: $\frac{{\sum }_{k = 1}^{4} {a}_{ijk}}{4} = {b}_{ij}$

The adjacency matrices are computed to determine which elements of the arrays will be convoluted, in particular to determine which edges will be used in the convolution. The convolution is performed by successively advancing to each edge of the adjacency matrix and selecting the edges to which the kernel is applied in each advancement. The edges are selected based on an edge type, a kernel size and a selection operation.

A preselection is performed based on the edge type. One of the following preselections may be performed based on the value of the edge type:
a) same: preselecting the edges originated in the same node as the edge to which the convolution has advanced and the edges arriving at the same node as the edge to which the convolution has advanced (case exemplified in figure 4A, when the convolution advances to element b₂₃);
b) contrary: preselecting the transposed of the edges preselected in a) instead of the edges preselected in a) (case exemplified in figure 4B, when the convolution advances to element b₂₃); and
c) global: preselecting the edges preselected in a) in addition to the edges preselected in b) (case exemplified in figure 4C, when the convolution advances to element b₂₃).

Thereby, the preselected edges are associated with communication of device A of the computing network and with communication of device B of the computing network so that each edge of the preselected edges fulfills at least one of the following conditions: the edge is indicative of at least one parameter of communication from device A to a device of the network, the edge is indicative of at least one parameter of communication to device B from a device of the network, the edge is indicative of at least one parameter of communication from device B to a device of the computing network and the edge is indicative of at least one parameter of communication to device A from a device of the computing network. Since the edges are selected from the preselected edges, the values of the edges to which the kernel is applied are a subset of elements of subsets of elements of the array, wherein each subset of elements is associated with communication of one device A of the network and with communication of device B of the network so that each element of the same subset fulfills at least one of the following conditions: the element is indicative of at least one parameter of communication from device A to a device of the network, the element is indicative of at least one parameter of communication to device B from a device of the network, the element is indicative of at least one parameter of communication from device B to a device of the computing network and the element is indicative of at least one parameter of communication to device A from a device of the computing network.

The selection of the edges is performed from the preselected edges based on the kernel size and the parameter "selection operation". The kernel size determines the number of edges that are selected. The kernel size refers to the size of the kernels. The kernel size differs from the one of classical convolutional neural networks in that, whereas in classical neural networks the kernel size is a duple (n, m) (wherein n and m are integers) representing a rectangle having n and m as lengths of sides, in the present case the kernel size is also duple (n , m) but each value n and m represents a length of a vector, so that the kernel size refers to the sizes of two vectors.

The selection operation determines the rationale for selecting the edges. Some examples of selection operators are ordered weighted averaging (OWA) operators. Some examples of selection operations are:
- top_k: the edges, from the preselected edges, having the greatest values in the adjacency matrix are selected;
- low_k: the edges, from the preselected edges, having the lowest values in the adjacency matrix are selected;
- uniform sampling: the edges are randomly selected from the preselected edges; and
- proportional sampling: the edges, from the preselected edges, are selected based on a probability, wherein the probability of selecting each edge is based on the value of the respective edge in the adjacency matrix.

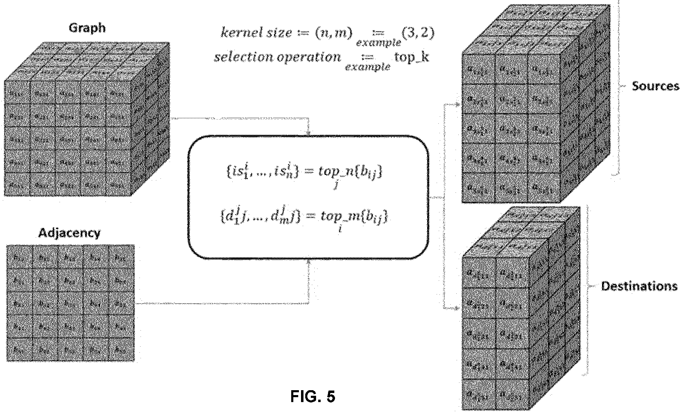

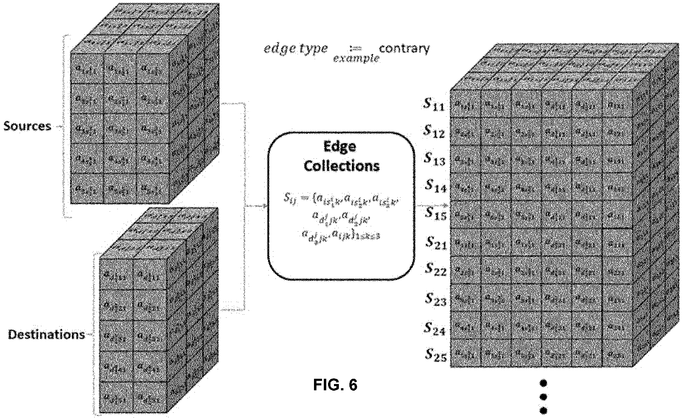

Figures 5 and 6 show an example of selection of edges for a case in which the original array is of 5x5x3, the kernel size is (3, 2), the selection operation is top_k and the edge type is contrary.

The combination operation determines the operation that the layer of the neural network uses to combine the kernels and the selected edges. In classic convolutional neural networks that operation is normally multiplication. In some embodiments, the combination operation may be at least one of: multiplication, division, addition, subtraction, max and min.

In some embodiments, the combination operation is a bounded function (e.g., a triangular norm). A bounded function prevents the results of the combination operation from diverging. In some embodiments, the bounded function involves at least one of the following operations: multiplication, division, addition, subtraction, max and min.

In some embodiments, the combination operation is performed on values between zero and one, and the combination operation is bounded if the values of the variables to which the combination operation is applied are between zero and one (e.g., the bounded function is a Lukasievitz addition). In these embodiments, it is desirable that the values of the elements of the array are between zero and one to avoid divergence.

The merge operation determines the operation that the layer of the neural network uses to aggregate the results from combining the kernels and the selected edges. In classic convolutional neural networks, that operation is normally addition. In some embodiments, the merge operation is a triangular conorm (i.e., t-conorm). In some embodiments, the merge operation may be at least one of: multiplication, division, addition, subtraction, max and min.

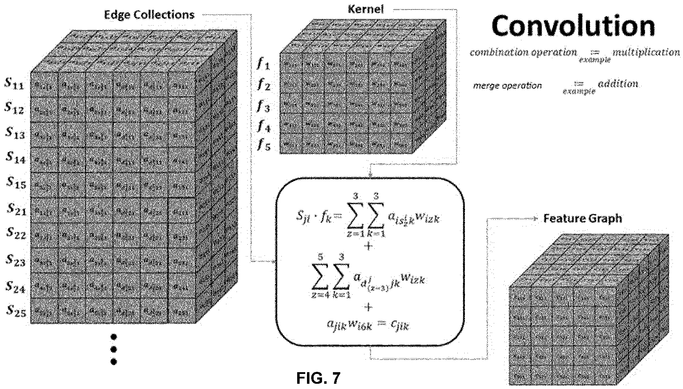

Figure 7 shows an example of convolution wherein the combination operation is multiplication and the merge operation is addition.

As a result of said convolution one resulting array is obtained for each original graph. The resulting array refers to features of the respective original graph from which the resulting array has been obtained.

In some embodiments, the training of the neural network is performed with communication data of the same computing network for which the neural network will be used in the detection of intrusions.

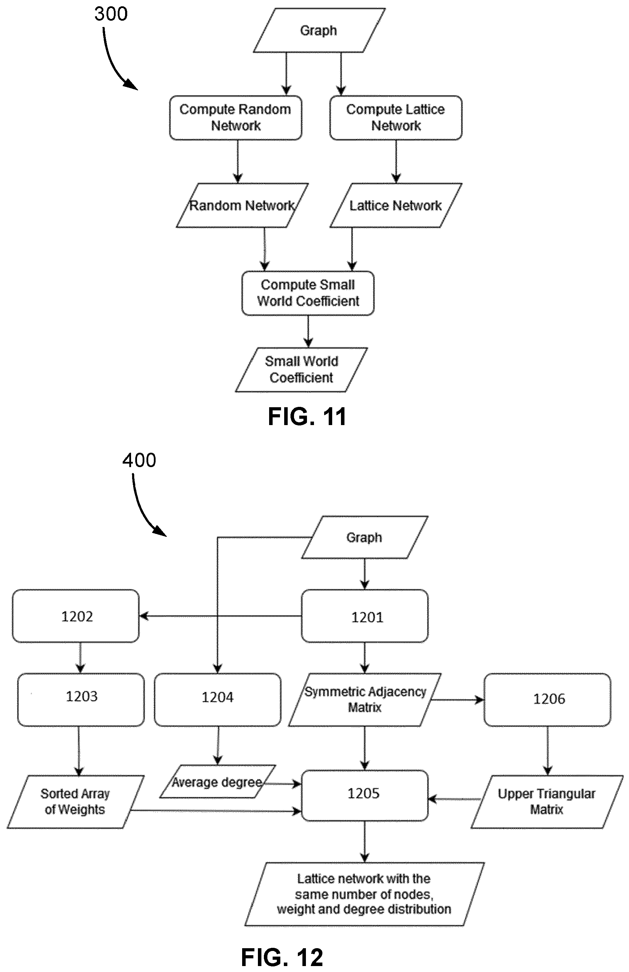

The total number of layers of the neural network may be computed, prior to the training, based on the clustering coefficient and the average path length of a graph representing the computing network. For example, the total number of layers may be obtained by performing the method 300 of figure 11.

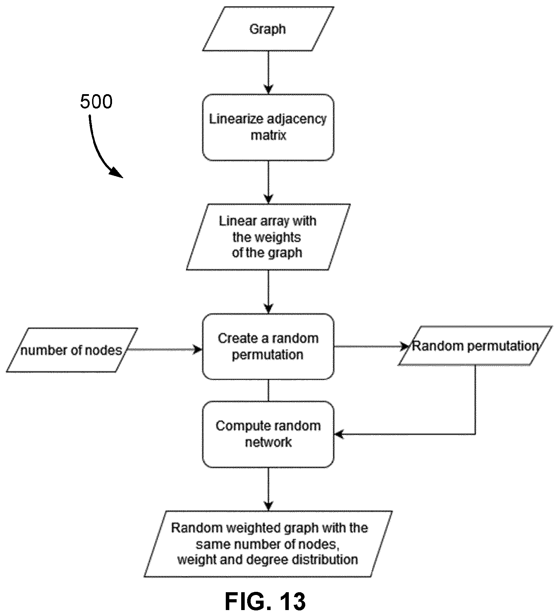

A lattice graph and a random graph are computed based on the original graph. The lattice graph has the same number of nodes and the same degree distribution as the original graph, and the weights of the lattice graph are a random distribution of the weights of the original graph. Figure 12 shows in more detail how the lattice graph may be obtained. The random graph has the same degree of distribution as the original graph. Figure 13 shows in more detail how the random graph may be obtained.

A small-world coefficient is obtained from the lattice graph and an equivalent random graph. The small-world coefficient is indicative of the possibility of finding short paths from one node of a network to any other (a general property of complex networks created from genuine interaction between nodes). A graph has a higher degree of small-worldness if the graph has a high clustering coefficient and small average path length. A higher small-world coefficient may be indicative of genuine network activity in a normal state, in contrast with patterns that may indicate an attack on the network. The total number of layers may be based on a comparison of:
- the clustering coefficient and average path length of the original graph, with
- the clustering coefficient and the path length of the lattice graph and the clustering coefficient and the path length of the random graph.

Figure 12 shows a method 400 for obtaining a lattice graph from an original graph. The operation 1201 of the method 400 symmetrizes an adjacency matrix of the original graph. The symmetry operation may be setting all pairwise symmetric entries equal to their average value (*wᵢⱼ*, *wⱼᵢ* = 0.5 · (*wᵢⱼ* + *wⱼᵢ*))*.* The operation 1206 of the method 400 outputs the upper triangular section of the symmetric matrix. The operation 1202 of the method 400 linearizes the symmetric matrix by concatenating the rows of the matrix. The operation 1203 of the method 400 sorts the linear array output in the operation 1202. The operation 1204 of the method 400 obtains an average degree of the graph "r" by dividing the number of edges of the original graph by the number of nodes of the original graph. This average degree is the number of edges per node that is to be distributed (e.g., regularly distributed) in the adjacency matrix of the original graph. The operation 1205 of the method 400 is a loop that, for each node, rewires edges of the network. Thereby, each node is joined by both edges having a relatively great value and edges having a relatively low value, thus allowing obtaining a regular distribution of the lattice. The operation 1205 of the method 400 splits the sorted array with the original weights in r sub-arrays of length n (n being the number of nodes of the original graph), assigning one weight from each sub-array to each node. The selected weights are excluded from further selections to avoid repetitions. The adjacency matrix of the lattice network is updated with the selected weight.

Figure 13 shows a method 500 for obtaining a random graph from an original graph. The operation Linearize adjacency matrix linearizes an adjacency matrix of the original graph by concatenating the rows of the adjacency matrix. The operation Create a random permutation generates a random permutation of size n² (n being the number of nodes of the original graph). The operation Compute random network updates the edges of the network according to the random permutation.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method for calculating whether data is indicative of an intrusion into a computing network, the computing network comprising at least two devices, the data being indicative of parameters of communication of the at least two devices, the method comprising:
obtaining an array (20) based on the data, the array (20) comprising at least three dimensions, wherein each element of the array is indicative of at least one parameter of communication from one device of the computing network to one device of the computing network; and
processing the array with a neural network, the neural network being configured to perform convolution by applying a kernel to each subset of elements of the array, wherein each subset of elements is associated with communication of device A of the computing network and with communication of device B of the computing network so that each element of the same subset fulfills at least one of the following conditions: the element is indicative of at least one parameter of communication from device A to a device of the computing network, the element is indicative of at least one parameter of communication to device B from a device of the computing network, the element is indicative of at least one parameter of communication from device B to a device of the computing network and the element is indicative of at least one parameter of communication to device A from a device of the computing network; wherein every pair of devices A and B of the network is associated with a subset of elements of the array.

2. The method of claim 1, wherein each subset of elements is associated with communication from one device A of the computing network and with communication to one device B of the computing network so that each element of the same subset fulfills at least one of the following conditions: the element is indicative of at least one parameter of communication from device A to a device of the computing network and the element is indicative of at least one parameter of communication to device B from a device of the computing network.

3. The method of claim 1, wherein at least some of the subsets of elements are associated with communication of device A of the computing network and with communication of device B of the computing network so that each subset of the at least some subsets fulfills condition i), condition ii) and fulfill that device A is other than device B:
- condition i):
∘ at least one element of the subset is indicative of at least one parameter of communication to device A from a device of the computing network different than device A, and/or
∘ at least one element of the subset is indicative of at least one parameter of communication from device B to a device of the computing network different than device B; and
- condition ii):
∘ at least one element of the subset is indicative of at least one parameter of communication to device B from a device of the computing network different than device B, and
∘ at least one element of the subset is indicative of at least one parameter of communication from device A to a device of the computing network different than device A.

4. The method of any one of the previous claims, wherein each subset of elements to which the kernel is applied is a selection from elements of the array (20) associated with communication of device A and elements of the array associated with communication of device B.

5. The method of claim 4, wherein the selection from the elements of the array (20) associated with communication of device A and from the elements of the array associated with communication of device B are based on aggregated values (b₁₃, b₂₃, b₃₃, b₄₃, b₂₁, b₂₂, b₂₃, b₂₄) of the elements of the array associated with communication of device A and of the elements of the array associated with communication of device B.

6. The method of claim 5, wherein each aggregated value results from aggregating the values of the elements of the array for a same pair of device of communication source and device of communication destination of the computing network, thus obtaining an aggregated value for each combination of source and destination device of the computing network.

7. The method of claim 5 or 6, wherein the aggregation is computed by applying an ordered weighted averaging operator.

8. The method of any one of the previous claims, wherein the at least one parameter of communication is at least one of: a rate of communication between the respective devices, and data size sent and/or received in the communication by at least one of the respective devices.

9. The method of any one of the previous claims, the method comprising obtaining, for each interval of time of several intervals of time or for each session of several sessions or for each packet set of several packet sets, an array (20) comprising at least three dimensions, the array (20) being based on data indicative of parameters of communication of the devices of the computing network in the respective interval of time or session or packet set, so that an array (20) is obtained for each interval of time or session or packet set; wherein each element of the arrays is indicative of at least one parameter of communication from one device of the computing network to one device of the computing network; the method comprising processing each array of the arrays with the neural network.

10. The method of any one of the previous claims, wherein the results of processing the array with the neural network are result values, and the method further comprises processing the result values to calculate whether the data is indicative of an intrusion into a computing network.

11. The method of any one of the previous claims, wherein a total number of layers of the neural network is computed based on the clustering coefficient and the average path length of a graph representing the computing network; wherein the graph comprises nodes and edges joining the nodes, wherein each node represents a device of the computing network, and wherein each edge represents one of:
- at least one parameter of a unidirectional communication between the two devices represented by the two nodes joined by the respective edge, and
- at least one parameter of communication having as source and destination the same device represented by a node from which the respective edge starts and in which the respective edge ends.

12. A data processing apparatus or system comprising means for carrying out the method of any one of the previous claims.

13. A computer program product comprising instructions which, when the program is executed by a computer, cause the computer to carry out the method of any one of claims 1 to 11.

14. A computer-readable medium comprising instructions which, when executed by a computer, cause the computer to carry out the method of any one of claims 1 to 11.
